# EUROPEAN PATENT SPECIFICATION

(11) **EP 2 527 693 B1**
(45) Date of publication and mention of the grant of the patent: **20.07.2016**
(21) Application number: 12167627.4
(22) Date of filing: 11.05.2012
(51) Int. Cl.: F16J 15/00, F16J 15/16, F16J 15/40, F16J 15/44, F04C 27/00

(54) **Shaft sealing structure and rotary fluid machine**
Wellendichtungsanordnung und Drehflüssigkeitsmaschine
Structure d'étanchéité d'arbre et machine à fluide rotative

(30) Priority: 26.05.2011 JP 2011118156; 26.05.2011 JP 2011118160
(43) Date of publication of application: 28.11.2012
(73) Proprietor: KABUSHIKI KAISHA KOBE SEIKO SHO, Kobe-shi, Hyogo 651-8585 (JP)
(72) Inventor: Miyatake, Toshiyuki, Kako-gun,, Hyogo 675-0155 (JP); Kuwabara, Hideaki, Kako-gun, Hyogo 675-0155 (JP)
(74) Representative: TBK

(56) References cited:
- EP-A2- 0 320 956
- GB-A- 2 127 490
- US-A- 3 377 073
- US-A- 5 809 863
- US-A1- 2004 188 946

## Description

### BACKGROUND OF THE INVENTION

### Field of the Invention

The present invention relates to a shaft sealing structure and a rotary fluid machine.

### Description of the Related Art

A shaft sealing structure for sealing a gap between a rotation shaft and a housing is necessary in a rotary fluid machine. For example, in a screw compressor, a fluid leaking from a rotor chamber along a rotor shaft may reach a bearing supporting the rotor shaft and damage the bearing. Particularly in the rotary fluid machine, a shaft sealing for the rotor shaft on a discharge side where fluid pressure is high tends to pose a problem.

As a shaft sealing structure between a screw rotor of a rotor shaft and a bearing on a discharge side, the screw compressor for steam according to Japanese Patent Application Laid-Open No. 2009-287413 employs a structure in which a first labyrinth seal, a second labyrinth seal, and a lip seal are provided in sequence starting from the screw rotor side, a shaft sealing fluid for aiding the shaft sealing performed by the labyrinth seals is supplied to a gap between the first labyrinth seal and the second labyrinth seal, and a portion between the second labyrinth seal and the lip seal is opened to the atmosphere.

The labyrinth seal is a seal device which forms a complex narrow gap between a rotor fit on the rotor shaft and a stator held by the housing and restricts a passage of a fluid flowing through the gap by means of a pressure loss of the fluid. However, the labyrinth seal does not function sufficiently unless the rotor and the stator are precisely aligned.

In the screw compressor, if a pressure of the fluid is applied on the screw rotor, the rotor shaft bends due to its structure. As a result, if the labyrinth seal is long in an axial direction, an amount of the bend of the rotor shaft is large, the labyrinth 3seal and the shaft come in contact with each other, and there is a risk that the shaft damages the labyrinth seal in the screw compressor. Consequently the shaft sealing by the labyrinth seals can become insufficient.

In the screw compressor according to Japanese Patent Application Laid-Open No. 2009-287413, if the shaft sealing by the labyrinth seals become insufficient by any chance, the steam leaking from the rotor chamber may pass through the labyrinth seals and damage the lip seal. Particularly in this type of compressor for compressing steam, the steam which has passed through the labyrinth seals increases the temperature at a friction portion between the lip seal and the rotor shaft, and even if the leak is small in amount, the increased temperature may cause damage in the lip seal. If a lubrication fluid at a low temperature is supplied to a space between the lip seal and the rotor chamber in order to prevent this problem, the fluid at the low temperature leaks to the rotor chamber side, thereby condensing the vapor, resulting in a decrease in efficiency of the compressor.

Furthermore, a shaft sealing structure according to the preamble of claim 1 is known from US 3 377 073 A. Further shaft sealing structures are disclosed in US 2004/188 946 A1, US 5 809 863 A, EP 0 320 956 A2 and GB 2 127 490 A.

### SUMMARY OF THE INVENTION

In view of the foregoing problem, it is an object of the present invention to provide a shaft sealing structure which does not present a decrease in a shaft seal capability due to a bend of a shaft, and a rotary fluid machine which does not present a decrease in a shaft seal capability even if a rotor shaft bends.

In order to solve the problem, a shaft sealing structure according to the present invention is a shaft sealing structure for sealing a gap between a rotation shaft of a rotor and a housing enclosing the rotation shaft with a clearance therebetween, wherein the rotation shaft is supported by a bearing, comprising the rotor shaft, the screw rotor, a first flange that projects from the housing toward the rotation shaft and is provided with an annular seal surface perpendicular to the rotation shaft, a second flange that projects from the housing toward the rotation shaft and is provided with a support surface opposing the seal surface, a seal ring that is arranged between the first flange and the second flange and has an inner diameter slightly larger than an outer diameter of the rotation shaft, and an energizing member that is arranged between the seal ring and the support surface and presses the seal ring against the seal surface.

This structure enables a movement of the seal ring in a radial direction along the seal surface. As a result, even if the rotation shaft bends, the seal ring moves following the rotation shaft, the gap between the seal ring and the rotation shaft will not increase, and the shaft sealing capability will not decrease.

Moreover, the shaft sealing structure according to the present invention comprises a plurality of shaft sealing portions each having the combination of the first flange, the second flange, the seal ring, and the energizing member, where in the housing is provided with a seal fluid channel that supplies a seal fluid to a supply space formed between neighboring ones of said seal rings.

According to this structure, even if the rotation shaft bends, the seal rings move following the rotation shaft, the gaps between them and the rotation shaft do not become large. In addition, since the seal fluid is supplied to the supply space between the seal rings which do not present a decrease in shaft sealing capability, the seal fluid flows out from the supply space through the gap between the seal rings and the rotation shaft. This flow of seal fluid prohibits a fluid to be sealed by the shaft sealing structure from entering the supply space, resulting in complete shaft sealing.

Moreover, in the shaft sealing structure according to the present invention provided with the multiple shaft sealing portions, the housing is provided with a discharge channel for communicating a discharge space formed between neighboring ones of said seal rings with a low pressure space lower in pressure than the seal fluid, and the discharge space is located on a high pressure side, a screw rotor side, with respect to the supply space.

According to this structure, the fluid to be sealed leaking from the high pressure side into the discharge space, and the seal fluid flowing out from the supply space into the discharge space can be discharged to the outside from the discharge channel, the discharge space can be maintained at a lower pressure than that in the supply space, and the fluid to be sealed can be thus surely prevented from entering into the supply space.

Moreover, in the shaft sealing structure according to the present invention, the seal ring may be made of a material having a same coefficient of thermal expansion as the rotation shaft.

According to this structure, even if the rotation shaft presents a thermal expansion, the seal ring expands at approximately the same ratio, the gap between the rotation shaft and the seal ring does not change largely, and the sealing capability is stable.

Moreover, in the shaft sealing structure according to the present invention, the seal ring may be provided with a composite plating coat in which PTFE particles are dispersed and co-deposited in an electroless nickel coat.

According to this structure, when the rotation shaft bends, comes in contact with the seal ring and moves the seal ring in the radial direction, a friction therebetween is small, and a friction or a seizure of the seal ring and the rotation shaft can be prevented. Moreover, a friction between the seal surface and the seal ring is also small, and a property of following the bend of the rotation shaft is high.

In the shaft sealing structure according to the present invention provided with multiple shaft sealing portions, the rotation shaft may be provided with a trapezoidal groove having a trapezoidal cross section and formed over an entire periphery at a position opposing the seal fluid channel.

According to this structure, the seal fluid spreads in the trapezoidal groove at a pressure equal over the entire periphery of the rotation shaft, thereby forming a uniform flow of the seal fluid over the entire periphery of the gap between the seal ring and the rotation shaft, resulting in a secure sealing of the fluid to be sealed by the seal fluid. Moreover, inclined side walls of the trapezoidal groove apply a centrifugal force to the fluid tending to move toward the radially inside along the side walls, thereby restraining the movement thereof.

In the shaft sealing structure according to the present invention provided with the multiple shaft sealing portions, the rotation shaft may be provided with a triangular groove having a triangular cross section and formed over an entire periphery at a position opposing the discharge channel.

According to this configuration, a centrifugal force is applied to the fluid to be sealed tending to move toward the radially inside along an inclined surface, thereby restraining the movement thereof.

Moreover, the shaft sealing structure according to the present invention provided with the multiple shaft sealing portions may include a sleeve that is disposed on a low pressure side with respect to the supply space and is provided with a conical outer peripheral surface increasing in diameter toward a low pressure side; and a third flange that projects from the housing and is provided with a conical inclined surface forming a minute gap between the conical inclined surface and the outer peripheral surface.

This configuration can apply a centrifugal force to a fluid entering the minute gap from the low pressure side, thereby preventing the movement thereof.

Moreover, a rotary fluid machine according the present invention is provided with any of the above-described shaft sealing structures.

According to this configuration, even if the rotation shaft is bended by an action of a fluid to be compressed acting on the rotation shaft, the shaft sealing capability does not decrease, a life of the shaft sealing structure is long, and a labor required for maintenance is thus reduced.

### BRIEF DESCRIPTION OF THE DRAWINGS

FIG. 1 is a cross sectional view of a shaft sealing structure according to a first embodiment of the present invention; and
FIG. 2 is a cross sectional view of a shaft sealing structure according to a second embodiment of the present invention.

### DESCRIPTION OF THE PREFERRED EMBODIMENTS

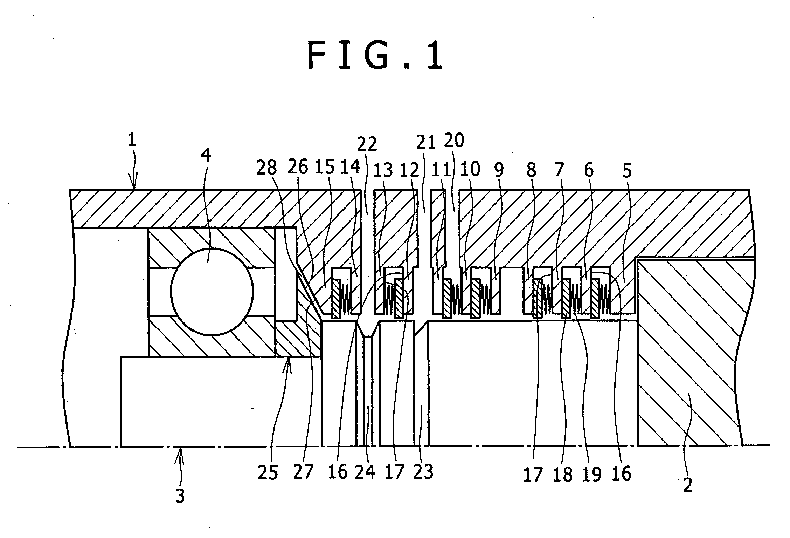

A description will now be given of embodiments of the present invention referring to drawings. FIG. 1 shows a shaft sealing structure of a rotary fluid machine according to a first embodiment of the present invention. This embodiment is an example in which the present invention is applied to a shaft seal on a discharge side of a screw compressor for compressing steam. In other words, in this embodiment, a fluid to be sealed by this shaft sealing structure is the steam.

According to this embodiment, a rotor shaft (rotation shaft) 3 of a screw rotor 2 is supported by a ball bearing 4 inside a housing 1.

Multiple flanges 5-15 projecting in a radial direction toward the rotor shaft 3 are formed on the housing 1. Side surfaces on the screw rotor 2 side (high pressure side) of the flanges 6, 7, 8, 10, 11, 15, and a side surface on the ball bearing 4 side (low pressure side) of the flange 12 form seal surfaces 16 perpendicular to the rotor shaft 3, respectively. Moreover, side surfaces on the ball bearing 4 side (low pressure side) of the flanges 5, 6, 7, 9, 10, 14, and a side surface on the screw rotor 2 side (high pressure side) of the flange 13 form support surfaces 17 perpendicular to the rotor shaft 3, respectively.

A seal ring 18 an inner diameter of which is slightly larger than the rotor shaft 3 and an energizing member 19 compressed in an axial direction are provided in each of gaps between the flanges 5 and 6, between the flanges 6 and 7, between the flanges 7 and 8, between the flanges 9 and 10, between the flanges 10 and 11, between the flanges 12 and 13, and between the flanges 14 and 15. The energizing member 19 is in contact with the sealing ring 18 on one end, and is in contact with the support surface 17 on the other end, and presses the seal ring 18 against the seal surface 16 by an elastic force thereof.

The seal ring 18 according to this embodiment is provided with a metal ring made of the same material (such as stainless steel) as that of the rotor shaft 3 and a composite plating coat (such as KANIFLON (registered trademark)) in which PTFE particles are dispersed and co-deposited in an electroless nickel coat.

In the housing 1, a first discharge channel 20 opened to the atmosphere is provided in a first discharge space formed between the flanges 10 and 11, namely between the seal ring 18 pressed against the seal surface 16 of the flange 10 and the seal ring 18 pressed against the seal surface 16 of the flange 11, and a second discharge channel 21 opened to the atmosphere is provided in a second discharge space formed between the flanges 11 and 12, namely between the seal ring 18 pressed against the seal surface 16 of the flange 11 and the seal ring 18 pressed against the seal surface 16 of the flange 12.

Moreover, in the housing 1, a seal fluid channel 22 which feeds a seal fluid (such as air or nitrogen gas) is provided in a supply space formed between the flanges 13 and 14, namely between the seal ring 18 pressed against the seal surface 16 of the flange 12 and the seal ring 18 pressed against the seal surface 16 of the flange 15. As a result, the first discharge channel 20 and the second discharge channel 21 are provided closer to a high pressure side (screw rotor 2 side) than the seal fluid channel 22.

On the rotor shaft 3, a V-shaped triangular groove 23 of which the screw rotor 2 side is obliquely inclined at approximately 45° and the ball bearing 4 side is vertical is formed at a position opposing the second discharge channel 21, and further a trapezoidal groove 24 having a trapezoidal cross section and having a base extending in the axial direction and both side walls obliquely inclined at approximately 45° is formed at a position opposing the seal fluid channel 22.

Moreover, the rotor shaft 3 is reduced in diameter in the middle, and a sleeve 25 is fit between a step thereof and the ball bearing 4. The sleeve 25 projects to the outside so as to form an outer peripheral surface 26 in a conical shape increasing in diameter toward the ball bearing 4 side. A side surface of the flange 15 of the housing 1 on the bearing 4 side forms an inclined surface 27 in a conical shape inclined at the same angle as that of the outer peripheral surface 26 of the sleeve 25. As a result, a narrow seal gap 28, which is a minute gap inclined so as to increase in diameter toward a low pressure side, is formed between the inclined surface 27 of the flange 15 and the outer peripheral surface 26 of the sleeve 25

According to the seal structure of this embodiment, the seal rings 18 in close contact with the seal surfaces 16 are close to the outer periphery of the rotor shaft 3, respectively, thereby generating a pressure loss in the fluid which tends to pass through the minute gaps between the seal rings 18 and the rotor shaft 3, thereby providing a shaft sealing function of restraining the steam from passing.

The seal ring 18 can move in the radial direction along the seal surface 16. Therefore, even if the rotor shaft 3 bends, and the rotor shaft 3 deviates from the center of the housing 1 at the position of each of the seal rings 18, the seal rings 18 move radially, respectively, following the rotor shaft 3. As a result, wears and damages of the seal rings 18 and the rotor shaft 3 are prevented, and each gap between each seal ring 18 and the rotor shaft 3 is maintained so as not to increase, thereby preventing a decrease in shaft sealing capability.

In other words, the pair of the flanges forming the seal surface 16 and the support surface 17, and the seal ring 18 and the energizing member 19 disposed between the seal surface 16 and the support surface 17 form a shaft sealing portion, which is the minimum unit of the shaft sealing structure, and this embodiment includes seven shaft sealing portions. It is to be understood that the shaft sealing structure for the rotary fluid machine according to this invention is not limited to the form having the seven shaft sealing portions. The number of the shaft sealing portions can be properly increased or decreased.

Moreover, the seal ring 18 is made of the same material as that of the rotor shaft 3, and the coefficient of thermal expansion thereof is the same as that of the rotor shaft 3. Thus, even if the temperature of the rotor shaft 3 increases, and the diameter of the rotor shaft 3 increases due to the thermal expansion, the seal ring 18 also thermally expands, thereby increasing the inner diameter thereof. As a result, the gap between the rotor shaft 3 and the seal ring 18 is maintained approximately constant, and the shaft sealing capability does not change.

Moreover, since the seal ring 18 includes the composite plating coat in which PTFE particles are dispersed and co-deposited in an electroless nickel coat, which is a surface treatment for a reduced friction coefficient, the friction force between the seal ring 18 and the seal surface 16 is small, and the seal ring 18 can be radially moved along the seal surface 16 by a small force. As a result, when the rotor shaft 3 deviates from the center and comes in contact with the seal ring 18, the seal ring 18 surely moves. Further, this surface treatment also reduces the friction between the seal ring 18 and the rotor shaft 3, and can thus restrain wears and damages of the seal ring 18 when the rotor shaft 3 deviates from the center and comes in contact with the seal ring 18, thereby maintaining the shaft sealing capability for a long period.

It should be noted that another type of surface treatment (surface treatment for a reduced friction coefficient such as a friction coefficient µ of approximately 0.2 or less, specifically, surface treatment such as coating treatment by electroless plating using ternary alloy including nickel, phosphorus and boron (KANIBORON (registered trade mark)) may be applied to the seal ring 18, or no surface treatment may be applied to the seal ring 18. Moreover, the seal ring 18 may be formed of a material different from that of the rotor shaft 3 (including a material other than metals, such as carbon). However, if the seal ring 18 is made of a material different from that of the rotor shaft 3 (particularly a material small in thermal expansion coefficient than the rotor shaft 3), it is preferable that, in order to prevent the seal ring 18 itself from being damaged by the thermal expansion of the rotor shaft 3, the seal ring 18 is not constructed by a single member but by a combination of multiple arc-shaped members such as a so-called segment seal.

Moreover, according to this embodiment, since the seal fluid having a pressure which is at least equal to or higher than the atmospheric pressure is supplied to the seal fluid channel 22, and the first discharge channel 20 and the second discharge channel 21 are provided closer to the screw rotor 2 side than the seal fluid channel 22, the pressure in the space between the flanges 12 and 15 is higher than the pressure between the flanges 11 and 12 (second discharge channel). As a result, through the gap between the seal ring 18 in close contact with the flange 12 and the rotor shaft 3, the seal fluid flows from the flange 13 to the flange 11, namely from the ball bearing 4 side to the screw rotor 2 side.

Therefore, even if steam which has flown out from the screw rotor 2 along the rotor shaft 3 passes through the seal ring 18 of the flange 11, the steam is blocked by the flow of the seal fluid between the seal ring 18 of the flange 12 and the rotor shaft 3, and can only flow out to the outside from the second discharge channel 21. Moreover, since steam which has flown out to the ball bearing 4 side along the rotor shaft 3 is released to the atmosphere from the first discharge channel 20, the pressure in the second discharge channel 21 does not become higher than the pressure in the seal fluid channel 22, and constant flow of the seal fluid is maintained.

Moreover, according to this embodiment, on the rotor shaft 3, the triangular groove 23 is formed at the position opposing the second discharge channel 21. Even if steam which has leaked along the rotor shaft 3 condenses into condensed water, and the condensed water attaches to the rotor shaft 3 and reaches the triangular groove 23 along the rotor shaft 3, further movement of the condensed water toward the ball bearing 4 side along the rotor shaft 3 needs its movement toward radially inside along the triangular groove 23, which decreases in diameter toward the ball bearing 4 side. However, a centrifugal force generated by the rotation of the rotor shaft 3 acts on the condensed water on the rotor shaft 3, and the condensed water cannot move toward the bottom of the triangular groove 23. In other words, the condensed water cannot pass over the triangular groove 23.

Further, according to this embodiment, on the rotor shaft 3, the trapezoidal groove 24 is formed at the position opposing the seal fluid channel 22, and the seal fluid supplied from the seal fluid channel 22 thus spreads in the trapezoidal groove 24 at a pressure circumferentially uniform around the rotor shaft 3. This forms a uniform flow which passes at an equal velocity over the entire circumference of the gap between the neighboring seal ring 18 and rotor shaft 3. Therefore, circumferentially partial passage of the steam is also prevented.

Moreover, the inclined side walls of the trapezoidal groove 24 have a function of restraining the movement of liquid along the rotor shaft 3 by the centrifugal force as the triangular groove 23 has. As a result, the condensed water of the steam which has leaked from the screw rotor 2 does not move toward the ball bearing 4 side, and further, if a lubricant leaks from the ball bearing 4, the lubricant is stopped, thereby preventing the lubricant from further leaking.

Moreover, according to this embodiment, the seal gap 28, which is the inclined minute gap, is formed between the sleeve 25 and the flange 15. Even if the lubricant of the ball bearing 4 enters into the seal gap 28, the seal gap 28 applies the centrifugal force to the lubricant by the rotation of the outer peripheral surface 26, thereby pushing back the lubricant toward the ball bearing 4 side along the inclined surface 27. As a result, the lubricant of the ball bearing 4 is prevented from leaking to the screw rotor 2 side via the seal gap 28, thereby ensuring the lubrication of the ball bearing 4.

It should be noted that a low pressure communication channel communicating with a low pressure space (such as a gear box at the atmospheric pressure), which is not shown, is preferably connected to a space between the ball bearing 4 and the seal gap 28 in FIG. 1. According to this configuration, a flow of the seal fluid is formed such that the seal fluid supplied from the seal fluid channel 22 flows through a slight gap between the seal ring 18 and the rotor shaft 3 interposed between the flanges 14 and 15, and further through the seal gap 28 and the space between the ball bearing 4 and the seal gap 28 to the low pressure space, which is not shown. This flow of the seal fluid prevents the lubricant from leaking to the screw rotor 2 side via the seal gap 28. It should be noted that, in this case, a lubricant supply channel for supplying the lubricant to the ball bearing 4 is preferably formed.

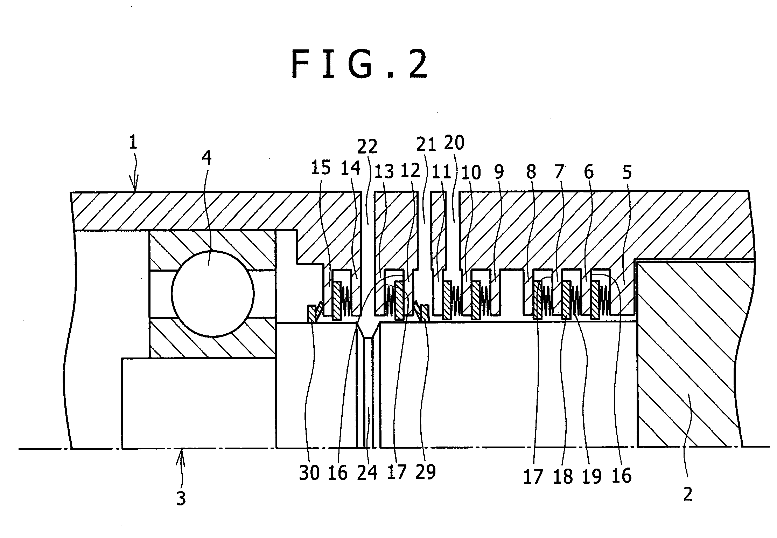

Next, a shaft sealing structure according to a second embodiment of the present invention is shown in FIG. 2. It should be noted that, in this embodiment, like components are denoted by like numerals as of the first embodiment, and will not be further described.

According to this embodiment, the rotor shaft 3 does not include the triangular groove 23, but a V ring 29 including a lip in close contact with the flange 12 is provided instead. Moreover, this embodiment does not include the sleeve 25, but a large diameter portion of the rotor shaft 3 extends so as to position the ball bearing 4. On this portion, a V ring 30 including a lip in close contact with the flange 15 is also provided.

According to this embodiment, the centrifugal force generated by the rotation of the rotor shaft 3 and the seal fluid supplied to the seal fluid channel 22 spread the lips of the V rings 29 and 30, thereby forming minute gaps between the V ring 29 and the flange 12 and between the V ring 30 and the flange 15. As a result, the V rings 29 and 30 rotate without contact with the flanges 12 and 15, thereby preventing the steam, the condensed water, and the lubricant from moving against the flow of the seal fluid. It should be noted that the V ring 29 and the flange 12, and also the V ring 30 and the flange 15 come in close contact with each other while the screw compressor is out of operation, thereby preventing the steam, the condensed water, and the lubricant from moving.

In the above-mentioned embodiments, though the invention is applied to the discharge side of the screw compressor, the present invention can be widely adopted as a shaft sealing structure for a rotation shaft of various machines. Moreover, though the present invention is effective as the shaft seating device on the high pressure side of the rotary fluid machine such as a screw expander (expander), the present invention can be applied to a shaft sealing device on the low pressure side.

Moreover, though the above-mentioned embodiments are provided with the discharge channels 20 and 21 opened to the atmosphere, it is only necessary for the discharge channels according to the present invention to communicate with a low pressure space maintained at a lower pressure than that of the seal fluid.

It should be noted that the shaft sealing structure according to the present invention and the rotary fluid machine provided with the shaft sealing structure are not limited to the above-described embodiments. For example, in the first embodiment, the V-shaped triangular groove 23 of which the screw rotor 2 side is inclined at approximately 45° and the ball bearing 4 side is vertical is formed. For the side inclined at approximately 45° and the vertical side, however, the angle of each side may be properly changed. Moreover, in place of the trapezoidal groove 24 having a trapezoidal cross section, a circular groove having a semicircular cross section or a V groove having a V-shaped cross section, for example, may be employed.

Moreover, in the second embodiment, the seal ring 18 and the energizing member 19 provided between the V rings 29 and 30 may be omitted, if a consumed quantity of a seal fluid (namely, a flow quantity of the fluid required for preventing the oil from leaking to the rotor chamber side and preventing the steam leaking from the rotor chamber from leaking to the bearing side) is permissible.

## Claims

1. A shaft sealing structure for sealing a gap between a rotation shaft (3) of a screw rotor (2) and a housing (1) enclosing the rotation shaft (3) with a clearance therebetween, wherein the rotation shaft (3) is supported by a bearing (4), comprising:
the rotation shaft (3);
the screw rotor (2);
a first flange (6, 7, 9, 10, 11, 15) that projects from the housing (1) toward the rotation shaft (3) and is provided with an annular seal surface (16) perpendicular to the rotation shaft;
a second flange (5, 6, 7, 8, 10, 14) that projects from the housing toward the rotation shaft and is provided with a support surface (17) opposing the seal surface (16);
a seal ring (18) that is arranged between said first flange (5, 6, 7, 9, 10, 11) and said second flange (6, 7, 8, 10, 14) and has an inner diameter slightly larger than an outer diameter of the rotation shaft (3);
an energizing member (19) that is arranged between said seal ring (18) and the support surface (17) and presses said seal ring (18) against the seal surface (16), a plurality of shaft sealing portions each having the combination of said first flange (6, 7, 9, 10, 11, 15), said second flange (5, 6, 7, 8, 10, 14), said seal ring (18), and said energizing member (19), wherein
the housing (3) is provided with a seal fluid channel (22) that supplies a seal fluid to a supply space formed between neighboring ones of said seal rings (18), wherein:
the housing (3) is provided with a discharge channel (20, 21) for communicating a discharge space formed between neighboring ones of said seal rings (18) with a low pressure space lower in pressure than the seal fluid; **characterized in that**
the discharge space is located on a screw rotor (2) side with respect to the supply space.

2. The shaft sealing structure according to claim 1, wherein said seal ring (18) is made of a material having a same coefficient of thermal expansion as the rotation shaft.

3. The shaft sealing structure according to claim 1, wherein said seal ring (18) is provided with a composite plating coat in which PTFE particles are dispersed and co-deposited in an electroless nickel coat.

4. The shaft sealing structure according to claim 1, wherein the rotation shaft (3) is provided with a trapezoidal groove (24) having a trapezoidal cross section and formed over an entire periphery at a position opposing said seal fluid channel (22).

5. The shaft sealing structure according to claim 1, wherein the rotation shaft (3) is provided with a triangular groove (23) having a triangular cross section and formed over an entire periphery at a position opposing said discharge channel (21).

6. The shaft sealing structure according to claim 1, further comprising the bearing (4), and comprising:
a sleeve (25) that is disposed on a bearing (4) side with respect to the supply space and is provided with a conical outer peripheral surface (26) increasing in diameter toward a bearing (4) side; and
a third flange (15) that projects from the housing (1) and is provided with a conical inclined surface (27) forming a minute gap between said conical inclined surface (27) and said outer peripheral surface (26).

7. A rotary fluid machine comprising the shaft sealing structure according to any of claims 1 to 6.

## Patentansprüche

1. Wellendichtungsstruktur zum Dichten eines Spalts zwischen einer Rotationswelle (3) eines Schraubenrotors (2) und einem Gehäuse (1), das die Rotationswelle (3) mit einem Zwischenraum dazwischen umschließt, wobei die Rotationswelle (3) durch ein Lager (4) gestützt ist, mit:
der Rotationswelle (3);
dem Schraubenrotor (2);
einem ersten Flansch (6, 7, 9, 10, 11, 15), der von dem Gehäuse (1) in Richtung der Rotationswelle (3) vorragt und der mit einer senkrecht zu der Rotationswelle verlaufenden, ringartigen Dichtungsfläche (16) versehen ist;
einem zweiten Flansch (5, 6, 7, 8, 10, 14), der von dem Gehäuse in Richtung der Rotationswelle vorragt und der mit einer der Dichtungsfläche (16) gegenüberliegenden Stützfläche (17) versehen ist;
einem Dichtungsring (18), der zwischen dem ersten Flansch (5, 6, 7, 9, 10, 11) und dem zweiten Flansch (6, 7, 8, 10, 14) angeordnet ist, und der einen Innendurchmesser hat, der geringfügig größer als ein Außendurchmesser der Rotationswelle (3) ist;
einem Erregungselement (19), das zwischen dem Dichtungsring (18) und der Stützfläche (17) angeordnet ist und den Dichtungsring (18) gegen die Dichtungsfläche (16) drückt, einer Vielzahl von Wellendichtungsabschnitten, die jeweils die Kombination aus dem ersten Flansch (6, 7, 9, 10, 11, 15), dem zweiten Flansch (5, 6, 7, 8, 10, 14), dem Dichtungsring (18) und dem Erregungselement (19) aufweisen, wobei
das Gehäuse (3) mit einem Dichtungsfluidkanal (22) versehen ist, der ein Dichtungsfluid zu einem zwischen benachbarten Dichtungsringen (18) ausgebildeten Zuführraum zuführt, wobei
das Gehäuse (3) mit einem Abgabekanal (20, 21) versehen ist, um einen zwischen benachbarten Dichtungsringen (18) ausgebildeten Abgaberaum mit einem Niederdruckraum zu verbinden, dessen Druck niedriger als der des Dichtungsfluids ist, **dadurch gekennzeichnet, dass**
sich der Abgaberaum mit Bezug auf den Zuführraum an einer Seite des Schraubenrotors (2) befindet.

2. Wellendichtungsstruktur gemäß Anspruch 1, wobei der Dichtungsring (18) aus einem Material gefertigt ist, das den gleichen thermischen Ausdehnungskoeffizienten wie die Rotationswelle hat.

3. Wellendichtungsstruktur gemäß Anspruch 1, wobei der Dichtungsring (18) mit einer Verbundplattierungsbeschichtung versehen ist, in welcher PTFE-Partikel in einer stromlosen Nickelbeschichtung verteilt und mit abgelagert sind.

4. Wellendichtungsstruktur gemäß Anspruch 1, wobei die Rotationswelle (3) mit einer trapezförmigen Nut (24) versehen ist, die einen trapezförmigen Querschnitt hat und über einen gesamten Umfang an einer dem Dichtungsfluidkanal (22) gegenüberliegenden Position ausgebildet ist.

5. Wellendichtungsstruktur gemäß Anspruch 1, wobei die Rotationswelle (3) mit einer dreieckigen Nut (23) versehen ist, die einen dreieckigen Querschnitt hat und über einen gesamten Umfang an einer dem Abgabekanal (21) gegenüberliegenden Position ausgebildet ist.

6. Wellendichtungsstruktur gemäß Anspruch 1, ferner mit dem Lager (4), und mit:
einer Hülse (25), die an einer Seite des Lagers (4) mit Bezug auf den Zuführraum angeordnet ist und die mit einer konischen Außenumfangsfläche (26) versehen ist, deren Durchmesser in Richtung der Seite des Lagers (4) zunimmt; und
einem dritten Flansch (15), der von dem Gehäuse (1) vorragt und der mit einer konisch geneigten Fläche (27) versehen ist, die einen winzigen Spalt zwischen der konischen, geneigten Fläche (27) und der Außenumfangsfläche (26) ausbildet.

7. Rotationsfluidmaschine mit der Wellendichtungsstruktur gemäß einem der Ansprüche 1 bis 6.

## Revendications

1. Structure d'étanchéité d'arbre pour sceller un espace entre un arbre de rotation (3) d'un rotor à vis (2) et un boîtier (1) enfermant l'arbre de rotation (3) avec un jeu entre eux, dans laquelle l'arbre de rotation (3) est supporté par un palier (4), comprenant :
l'arbre de rotation (3) ;
le rotor à vis (2) ;
une première bride (6, 7, 9, 10, 11, 15) qui fait saillie du boîtier (1) vers l'arbre de rotation (3) et est prévue avec une surface de joint d'étanchéité annulaire (16) perpendiculaire à l'arbre de rotation ;
une deuxième bride (5, 6, 7, 8, 10, 14) qui fait saillie du boîtier vers l'arbre de rotation et est prévue avec une surface de support (17) opposée à la surface de joint d'étanchéité (16) ;
une bague d'étanchéité (18) qui est agencée entre ladite première bride (5, 6, 7, 9, 10, 11) et ladite deuxième bride (6, 7, 8, 10, 14) et a un diamètre interne légèrement plus grand qu'un diamètre externe de l'arbre de rotation (3) ;
un élément d'excitation (19) qui est agencé entre ladite bague d'étanchéité (18) et la surface de support (17) et comprime ladite bague d'étanchéité (18) contre la surface de joint d'étanchéité (16), une pluralité de parties d'étanchéité d'arbre ayant chacune la combinaison composée de ladite première bride (6, 7, 9, 10, 11, 15), de ladite deuxième bride (5, 6, 7, 8, 10, 14), de ladite bague d'étanchéité (18) et dudit élément d'excitation (19), dans laquelle
le boîtier (3) est prévu avec un canal de fluide de joint d'étanchéité (22) qui amène un fluide de joint d'étanchéité vers un espace d'alimentation formé entre des bagues voisines desdites bagues d'étanchéité (18), dans laquelle :
le boîtier (3) est prévu avec un canal de décharge (20, 21) pour faire communiquer un espace de décharge formé entre les bagues voisines desdites bagues d'étanchéité (18) avec un espace basse pression ayant une pression inférieure au fluide de joint d'étanchéité ; **caractérisée en ce que**
un espace de décharge est positionné du côté du rotor à vis (2) par rapport à l'espace d'alimentation.

2. Structure d'étanchéité d'arbre selon la revendication 1, dans laquelle ladite bague d'étanchéité (18) est réalisée avec un matériau ayant le même coefficient de dilatation thermique que l'arbre de rotation.

3. Structure d'étanchéité d'arbre selon la revendication 1, dans laquelle ladite bague d'étanchéité (18) est prévue avec un revêtement de placage composite dans lequel des particules de PTFE sont dispersées et déposées conjointement dans un revêtement de nickel autocatalytique.

4. Structure d'étanchéité d'arbre selon la revendication 1, dans laquelle l'arbre de rotation (3) est prévu avec une rainure trapézoïdale (24) ayant une section transversale trapézoïdale et formée sur toute la périphérie dans une position opposée audit canal de fluide de joint d'étanchéité (22).

5. Structure d'étanchéité d'arbre selon la revendication 1, dans laquelle l'arbre de rotation (3) est prévu avec une rainure triangulaire (23) ayant une section transversale triangulaire et formée sur toute la périphérie dans une position opposée audit canal de décharge (21).

6. Structure d'étanchéité d'arbre selon la revendication 1, comprenant en outre le palier (4), et comprenant :
un manchon (25) qui est disposé du côté d'un palier (4) par rapport à l'espace d'alimentation et est prévu avec une surface périphérique externe conique (26) augmentant du point de vue du diamètre vers le côté du palier (4) ; et
une troisième bride (15) qui fait saillie du boîtier (1) et est prévue avec une surface inclinée conique (27) formant un espace minuscule entre ladite surface inclinée conique (27) et ladite surface périphérique externe (26).

7. Machine à fluide rotative comprenant la structure d'étanchéité d'arbre selon l'une quelconque des revendications 1 à 6.
